# EUROPÄISCHE PATENTANMELDUNG

(11) **EP 0 901 212 A2**
(43) Veröffentlichungstag der Anmeldung: **10.03.1999**
(21) Anmeldenummer: 98116124.3
(22) Anmeldetag: 26.08.1998
(51) Int. Cl.: H02J 3/01

(54) **Kompensator für asymmetrische Störströme bei Geräten mit schaltenden Leistungsendstufen**

(30) Priorität: 05.09.1997 DE 19738945
(71) Anmelder: SIEMENS AKTIENGESELLSCHAFT, 80333 München (DE)
(72) Erfinder: Bruckmann, Manfred, Dipl.-Ing., 90475 Nürnberg (DE)

(57) **Zusammenfassung**

Die Erfindung richtet sich auf eine Schaltungsanordnung zur Kompensation asymmetrischer Störströme, welche bei Geräten mit schaltenden Leistungsendstufen durch die Umladung parasitärer Ausgangskapazitäten hervorgerufen werden, mit einer zur Erfassung und/oder Beobachtung von Zustandsgrößen an das Gerät angekoppelten Steuer- und/oder Regelungsschaltung, deren Ausgangsstufe zur Einspeisung von Kompensationsströmen mit dem Gerätegehäuse und/oder einer Erdungsklemme gekoppelt ist.

## Beschreibung

Die Erfindung richtet sich auf eine Schaltungsanordnung zur Kompensation asymmetrischer Störströme, welche bei Geräten mit schaltenden Leistungsendstufen durch die Umladung parasitärer Ausgangskapazitäten hervorgerufen werden.

Insbesondere in der elektrischen Antriebstechnik bestand bereits seit längerem ein Bedürfnis nach Stromrichtergeräten mit verbesserten Drehzahl- und vor allem Lageregelungseigenschaften bei reduzierter Geräuschentwicklung. Dem hieraus entsprungenen Wunsch nach höheren, zulässigen Taktfrequenzen der Leistungsendstufen konnte in jüngerer Zeit aufgrund verbesserter Leistungstransistoren, bspw. sog. IGBT-Module, grundsätzlich entsprochen werden, jedoch zeigte sich, daß bei Einsatz derartiger "schneller" Leistungsmodule aufgrund der steileren Spannungsflanken an den aktiven Ausgängen des Stromrichters die dort unvermeidlich vorhandenen, parasitären Kapazitäten in kürzen Zeitabständen umgeladen werden müssen. Hierzu sind deutlich höhere Ladeströme notwendig, welche über das Gerätegehäuse und von dort zum Erdungspotential abfließen. Diese erhöhten Störströme können das Ansprechen von Schutzschaltungen auslösen und beeinträchtigen die Qualität der Netzspannung in der Umgebung des betreffenden Gerätes. Es ist daher wünschenswert, diese zur Erde abfließenden Störströme von der Umgebung eines Gerätes fernzuhalten.

Zu diesem Zweck ist beispielsweise in dem Fachaufsatz "High Frequency Leakage Current Reduduction Based on a Common-Mode Voltage Compensation Circuit" in der Fachzeitschrift IEEE 1996, Seiten 1961 - 1967, eine passive Kompensationsschaltung für die zum Umladen der an den aktiven Ausgängen eines Stromrichter-Leistungsteils unvermeidlich vorhandenen, parasitären Kapazitäten notwendigen Störströme offenbart. Zu diesem Zweck ist an den Ausgangsanschlüssen des Stromrichter-Leistungsteils ein kapazitiver Sternpunkt gebildet, der über eine erste Wicklung eines Koppeltransformators mit Erdpotential verbunden ist. Die andere Wicklung des Koppeltransformators ist einseitig ebenfalls geerdet, ihr freies Ende ist über einen Widerstand mit dem Mittelabgriff eines kapazitiven Spannungsteilers verbunden, der parallel zum Zwischenkreiskondensator des Stromrichters an dessen Gleichspannungsschienen angeschlossen ist. Im Idealfall soll hierbei der Koppeltransformator entsprechende Kompensationsströme aus dem Zwischenkreis des Stromrichters nach Erdepotential abfließen lassen. Dies kann jedoch nur in begrenztem Umfang gelingen, da ein realer Kopplungstransformator naturgemäß kein ideales Übertragungsverhalten aufweist. Damit ein Transformator eine gute Kopplung zwischen Primär- und Sekundärseite aufweist, muß dessen Wicklung möglichst streuarm ausgeführt sein, was zu aufwendigen und teuren Anordnungen führt.

Weiterhin ist in dem Fachaufsatz "Elimination of Common Mode Voltage in Three Phase Sinusoidal Power Converters" von A. L. Julian, T.A. Lipo und G. Oriti in IEEE 1996, Seiten 1968 - 1972 eine weitere Kompensationsschaltung für die störenden Erdströme an den aktiven Ausgängen eines dreiphasigen Wechselrichters offenbart. Hierbei ist parallel zu der Drehstrom-Brückenschaltung des Wechselrichters an die Zwischenkreisspannung ein weiterer Leistungstransistor-Zweig mit zwei in Serie geschalteten Leistungstransistoren vorhanden, deren gemeinsamer Knotenpunkt über einen Koppelkondensator an einen kapazitiven Sternpunkt des Wechselrichters angekoppelt ist. Die Leistungsfähigkeit einer derartigen Kompensationsschaltung ist äußerst begrenzt, da infolge der notwendigen Spannungsfestigkeit eines an die Zwischenkreisspannung angeschlossenen Transistors ausschließlich Leistungshalbleiter verwendet werden können, deren dynamisches Verhalten nicht besser ist als das der eigentlichen Leistungsmodule. Um Erdkurzschlüsse der Zwischenkreisspannung sicher auszuschließen, kann auch ein derartiger Kompensationsteil ausschließlich getaktet betrieben werden, so daß die Kompensationsspannung ebenfalls ausschließlich bei den beiden Zwischenkreispotentialen definiert vorgegeben werden kann. Eine derartige Kompensationsschaltung kann den Anforderungen moderner Stromrichter mit höheren Taktfrequenzen nicht entsprechen und bedeutet außerdem infolge des zusätzlichen Leistungstransistormoduls einschließlich der für dieses notwendigen Ansteuerschaltungen einen erheblichen Zusatzaufwand.

Aus den geschilderten Nachteilen vorbekannter Kompensationsschaltungen resultiert das die Erfindung initiierende Problem, ein Schaltungskonzept zur Kompensation der zum Erdpotential abschließenden Störströme an elektrischen Geräten mit getakteten Leistungsendstufen zu schaffen, das eine für eine gute Kompensation ausreichende Dynamik aufweist und außerdem mit möglichst preiswerten Bauelementen aufgebaut werden kann.

Zur Lösung dieses Problems sieht die Erfindung bei einer gattungsgemäßen Kompensationsschaltung eine zur Erfassung und/oder Beobachtung von Zustandsgrößen an das Gerät angekoppelte Steuer- und/oder Regelungsschaltung vor, deren Ausgangsstufe zur Einspeisung von Kompensationsströmen mit dem Gerätegehäuse und/oder einer Erdungsklemme gekoppelt ist. Hier wird einerseits auf elektronischem Weg eine aktive Steuerung bzw. Regelung vorgenommen, welche mit verhältnismäßig niedrigem Aufwand dennoch weitaus genauer ist als ein passiver Kopplungstransformator, und andererseits wird hier nicht eine kapazitive Ankopplung an einen virtuellen Sternpunkt vorgenommen, sondern ein nach dem Steuerungs- oder Regelalgorithmus bestimmter Kompensationsstrom wird direkt an dem Gerätegehäuse und/oder einer Erdungsklemme eingespeist.

Im Gegensatz zu bisherigen, aktiven Kompensationsschaltungen, welche als Leistungsstellglieder relativ langsame Leistungstransistoren benötigen, bevorzugt die Erfindung die Verwendung von schnellen Elektronik-Halbleitern im Bereich der Kompensator-Ausgangsstufe, welche eine hohe Regelungsdynamik erlauben, so daß die Umgebung eines derart kompensierten Gerätes von Störspitzen weitgehend frei ist.

Um die Dynamik der schnellen Elektronik-Halbleiter ausnutzen zu können, sieht die Erfindung weiterhin vor, daß die Kompensator-Ausgangsstufe als Push-Pull-Verstärker aufgebaut ist.

Um die Verwendung von schnellen (Kleinsignal-)Halbleitern möglich zu machen, sollte die Kompensator-Ausgangsstufe gemäß einem weiteren Aspekt der Erfindung an einer niedrigen (Kleinsignal-)Versorgungsspannung angeschlossen sein. Indem die erfindungsgemäße Kompensationsschaltung nicht von der hohen Zwischenkreisspannung gespeist wird, stehen als Halbleiter hochdynamische Kleinsignaltransistoren zur Verfügung, die einerseits ein weitaus besseres Zeitverhalten haben als Leistungstransistoren und andererseits nicht getaktet betrieben werden müssen, sondern infolge reduzierter Verlustleistungen ein kontinuierlich verstellbares Ausgangssignal liefern können, welches eine optimale Dynamik und damit Regelungsqualität erlaubt.

Der Schaltungsaufwand läßt sich weiterhin dadurch reduzieren, daß die Kompensator-Ausgangsstufe mit derselben Versorgungsspannung verbunden ist wie die Steuer- und/oder Regelungsschaltung. Es kann sich hierbei um die bei jedem elektronisch gesteuerten Gerät standardmäßig vorhandene Elektronik-Versorgungsspannung handeln, so daß der Zusatzaufwand im Idealfall auf die wenigen Bauteile der Kompensationselektronik beschränkt ist.

Wie jeder Verstärker stellt die Kompensator-Ausgangsstufe primär eine Ausgangsspannung zur Verfügung, gemäß deren Amplitude sich der gewünschte Kompensationsstrom einstellt. Um diesen definiert zum Erdpotential abfließen zu lassen, ist ein Anschluß der Kompensator-Ausgangsstufe mit dem Gerätegehäuse und/oder einer Erdungsklemme direkt oder über ein Kopplungsnetzwerk verbunden, während ein dem gegenüber definiert verstellbarer Spannungsanschluß der Kompensator-Ausgangsstufe bevorzugt an eine Referenzspannung, bspw. eine Zwischenkreisspannung direkt oder über ein Kopplungsnetzwerk angeschlossen ist. Das Kopplungsnetzwerk dient primär dazu, Spannungsschwankungen oder gar -spitzen des Leistungsteils von der Kompensatorelektronik fernzuhalten und kann im einfachsten Fall aus einem oder mehreren Kondensatoren bestehen. Auch ein Koppeltransformator kann aufgrund seiner galvanischen Trennung zwischen Primär- und Sekundärwicklung verwendet werden. Auch ist es möglich, durch weitere Elemente, insbesondere Spulen, eine gewünschte Dynamik zu erreichen.

Zur Messung des asymmetrischen Störstroms kann bspw. eine die Zuleitungen des Geräts oder die Anschlußleitungen zu dem Verbraucher umgebende Induktionsspule verwendet werden, auch kann in der Erdungsleitung ein Stromwandler angeordnet werden. Schließlich ist es auch möglich, die Ausgangsströme indirekt aus den Ausgangsspannungen zu bestimmen und hieraus wiederum den zum Erdpotential abfließenden Anteil zu berechnen.

Weitere Merkmale, Einzelheiten und Vorteile auf der Basis der Erfindung ergeben sich anhand der folgenden Beschreibung einiger bevorzugter Ausführungsbeispiele der Erfindung sowie anhand der Zeichnung. Hierbei zeigt:
- Fig. 1: Ein prinzipielle Blockschaltbild einer ersten Ausführungsform der Erfindung;
- Fig. 2: eine Konkretisierung des Ausführungsbeispiels nach Fig. 1; sowie
- Fig. 3: eine andere Ausführungsform der Erfindung.

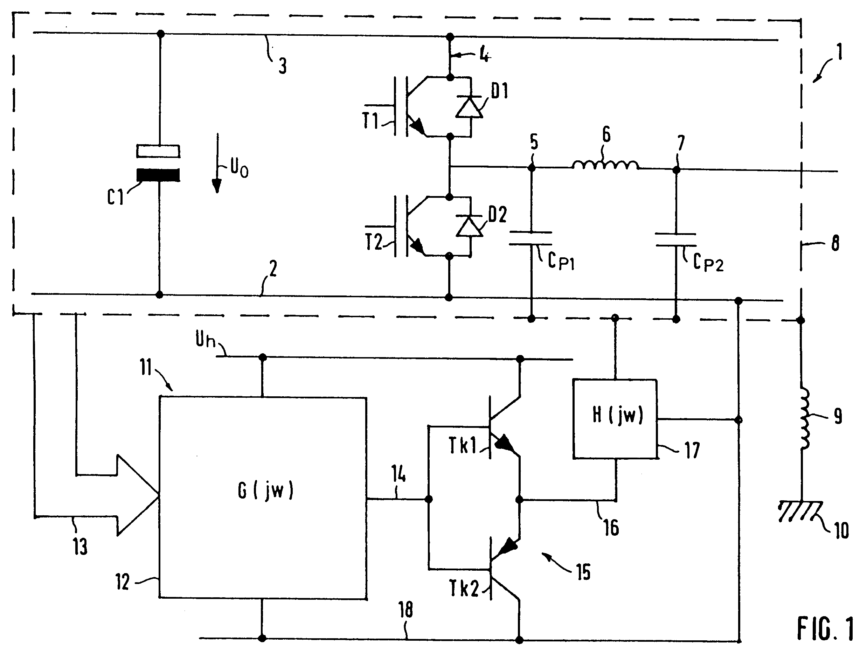

In Figur 1 ist bei 1 der Leistungsteil eines Drehstromumrichters angedeutet. Man erkennt den Zwischenkreiskondensator C1, der die Zwischenkreisspannung U0 zwischen den beiden Zwischenkreisschienen 2, 3 stabilisiert. Der mit dem Netz gekoppelte Gleichrichter ist bei der Darstellung gemäß Figur 1 weggelassen. Ferner ist eine Ausgangsstufe 4 des Wechselrichters dargestellt. Diese besteht in der üblichen Form aus zwei in Reihe geschalteten Leistungstransistoren T1, T2, welche in ihrer Gesamtheit die Zwischenkreispotentiale 2, 3 miteinander verbinden. Jedem Leistungstransistor T1, T2 ist eine Freilaufdiode D1, D2 antiparallel geschaltet. Um die Verlustleistung zu reduzieren, werden die Transistoren T1, T2 getaktet betrieben und ausschließlich abwechselnd eingeschalten, so daß sich keine Querkurzschlüsse der Zwischenkreisspannung U0 ausbilden können. Somit schwankt das Potential an dem aktiven Ausgang 5 dieses Wechselrichterzweigs 4 zwischen dem negativen Zwischenkreispotential 2 und dem positiven Zwischenkreispotential 3. Um diese hohen Spannungssprünge von einem angeschlossenen Verbraucher zumindest teilweise fernzuhalten, ist an dem Ausgang 5 eine Glättungsdrossel 6 angeschlossen. Dennoch bilden sich zwischen dem aktiven Ausgang 5 und dem durch die Drossel 6 im Signalverlauf geglätteten Ausgangsanschluß 7 und dem Potential des metallischen Gerätegehäuses 8 parasitäre Kapazitäten Cp1, Cp2 aus. Infolge der bei Verwendung von IGBT-Leistungstransistoren T1, T2 möglichen Taktfrequenzen von etwa 20 kHz ergeben sich insbesondere an dem aktiven Ausgang 5, aber auch an dem vorgeglätteten Ausgang 7 relativ steile Spannungsflanken, welche in den parasitären Kapazitäten Cp1, Cp2 Umladeströme mit hohen Stromspitzen nach sich ziehen, die zu dem Gehäuse 8 und von dort über eine Erdungsleitung 9 zum Erdpotential 10 abließen.

Diese störenden Erdungsströme können netzseitig Schutzschaltungen auslösen oder in der Umgebung installierte Geräte beeinträchtigen und sind daher vom Gesetzgeber hinsichtlich ihrer Maximalwerte reglementiert worden. Es sind daher Gegenmaßnahmen notwendig, um trotz der getakteten Leistungsendstufen 4 den zum Erdpotential 10 abfließenden Strom auf null zu regeln. Diesem Zweck dient die erfindungsgemäße Kompensationsschaltung 11. Kernstück dieser Kompensationsschaltung ist eine Steuer- oder Regelungsschaltung 12, die eingangsseitig 13 zur Erfassung und/oder Beobachtung des zum Erdpotential 10 abfließenden Störstroms an den Leistungsteil 1, die Erdungsleitung 9 und/oder den Regelungsteil des Gerätes angekoppelt ist und aus den solchermaßen zur Verfügung gestellten Informationen den tatsächlichen Wert des nach Erdpotential 10 abfließenden Störstroms ermittelt, insbesondere berechnet, oder schätzt. Mit dieser Information wird anhand eines Regelalgorithmus G(jw) ein Reglerausgangssignal 14 generiert, mit welchem die Kompensator-Ausgangsstufe 15 angesteuert wird. Diese besteht aus einem Push-Pull-Verstärker mit zwei in Reihe geschalteten Transistoren Tk1, Tk2, deren gemeinsamer Knoten 16 das aktive Ausgangssignal des Kompensatorschaltkreises 11 darstellt, welches über ein Kopplungsnetzwerk 17 mit einer Übertragungsfunktion H(jw) mit dem Metallgehäuse 8, gegebenenfalls auch mit einem Kühlkörper und/oder Erdungsanschluß zur Einspeisung eines Kompensationsstroms gekoppelt ist. Der Regelalgorithmus G(jw) ist derart optimiert, daß der Kompensationsstrom betragsmäßig dem von dem Leistungsteil 1 hervorgerufenen Gesamt-Störstrom entspricht, jedoch entgegengesetzte Vorzeichen aufweist, so daß dem Leistungsteil 1 als Störstromquelle die Kompensationsschaltung 11 als Störstromsenke zugeordnet wird, und der nach Erdpotential 10 abfließende Strom insgesamt zu null wird.

Für eine optimale Regelung ist auch eine hohe Dynamik des Kompensatorausgangs-Stellglieds 15 notwendig. Hier werden deshalb schnelle Kleinsignaltransistoren Tk1, Tk2 verwendet, wie sie in den vielfältigsten Ausführungen angeboten werden. Dies ist möglich, weil als Versorgungsspannung für die Kompensationsschaltung 11 eine niedrige Hilfsspannung Uh verwendet wird, deren negatives Potential 18 mit dem negativen Zwischenkreispotential 2 verbunden ist. Im Idealfall handelt es sich hierbei um die für den Regelungsteil des Gerätes 1, 8 zur Verfügung gestellte Elektronikspannung. Das Kopplungsnetzwerk 17 kann aus verschiedenen Reaktanzen aufgebaut sein, bspw. einem oder mehreren Kondensatoren und/oder Spulen. Außerdem ist es möglich, hier einen galvanisch getrennten Kopplungstransformator zu verwenden, dessen Sekundärwicklung bspw. an dem Gehäuse 8 angekoppelt oder in die Erdungsleitung 9 eingeschleift sein kann.

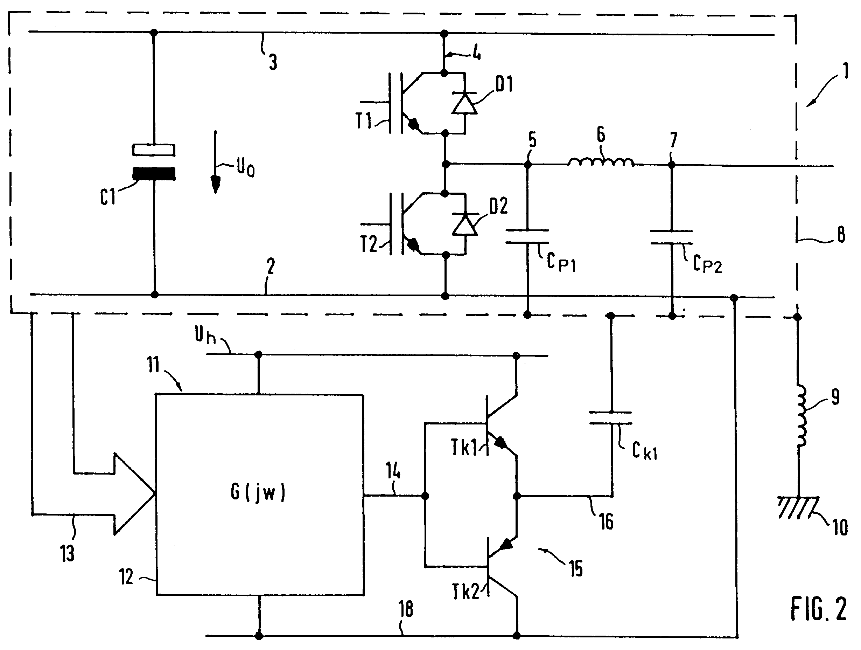

Die einfachste Realisierung des Kopplungsnetzwerks 17 ist in Figur 2 wiedergegeben und besteht aus einem Koppelkondensator Ck1, der den aktiven Ausgang 16 der Kompensator-Schaltung 11 mit dem Gerätegehäuse 8 verbindet. Dieser hält einerseits Spannungsspitzen von der Kompensatorschaltung 11 ab und hat andererseits ein definiertes Übertragungsverhalten, das von dem Steuer- oder Regelalgorithmus G(jw) zur Erzeugung des gewünschten Kompensationsstroms angesteuert werden kann.

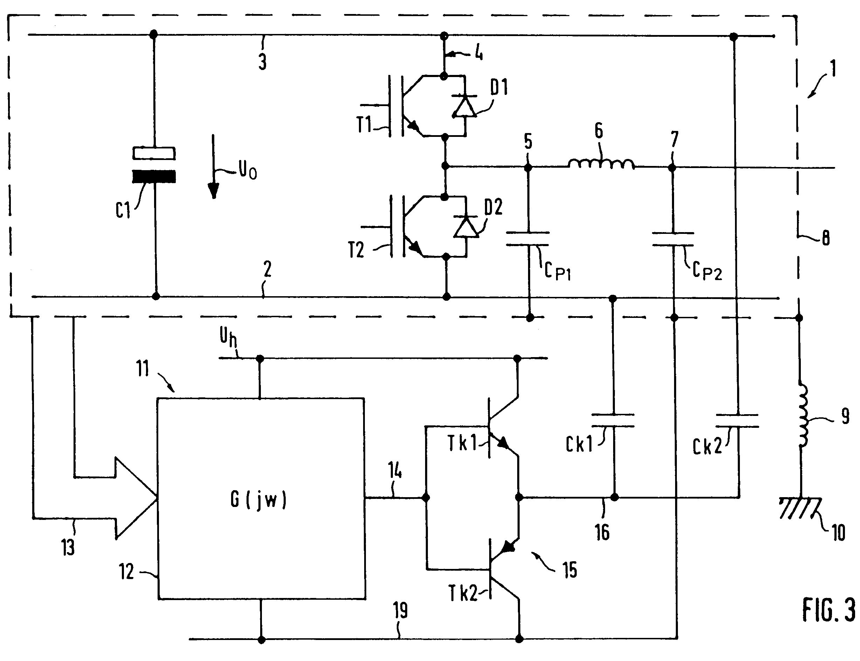

In Figur 3 ist eine abweichende Ankopplung der Kompensationsschaltung 11 gezeichnet. Hier ist das negative Potential 19 der Elektronik-Versorgungsspannung Uh direkt mit dem Gehäuse 8 verbunden, um hier den notwendigen Kompensationsstrom direkt einzuspeisen, so daß der zum Erdpotential 10 fließende Strom zu null ausgeregelt werden kann. Die Kompensationsströme werden hierbei aus den Umladeströmen von Koppelkondensatoren Ck1, Ck2 gewonnen, deren gemeinsamer Schaltungsknoten mit dem aktiven Ausgang 16 der Kompensator-Ausgangsstufe 15 verbunden ist, während die jeweils freien Anschlüsse der Koppelkondensatoren Ck1, Ck2 mit dem negativen bzw. positiven Zwischenkreispotential 2, 3 verbunden sind. Um die polare Kompensationsströme zu erreichen, können der Kompensator-Ausgangsstufe 15 entsprechende Halbleiter-Bauelemente antiparallel geschalten sein.

## Patentansprüche

1. Schaltungsanordnung (11) zur Kompensation asymmetrischer Störströme, welche bei Geräten (1) mit schaltenden Leistungsendstufen (4) durch die Umladung parasitärer Ausgangskapazitäten (Cp1, Cp2) hervorgerufen werden,
**gekennzeichnet durch** eine zur Erfassung und/oder Beobachtung von Zustandsgrößen an das Gerät (1) angekoppelte (13) Steuer- und/oder Regelungsschaltung (12), deren Ausgangsstufe (15) zur Einspeisung von Kompensationsströmen mit dem Gerätegehäuse (8), Kühlkörper und/oder einer Erdungsklemme (9) gekoppelt ist.

2. Schaltungsanordnung nach Anspruch 1,
**dadurch gekennzeichnet**, daß die Kompensator-Ausgangsstufe (15) mit schnellen Elektronik-Halbleitern (Tk1,Tk2) aufgebaut ist.

3. Schaltungsanordnung nach Anspruch 2,
**dadurch gekennzeichnet**, daß die Kompensator-Ausgangstufe (15) als Push-Pull-Verstärker aufgebaut ist.

4. Schaltungsanordnung nach Anspruch 3,
**dadurch gekennzeichnet**, daß die Kompensator-Ausgangsstufe (15) an einer niedrigen (Kleinsignal-) Versorgungsspannung (Uh, 18) angeschlossen ist.

5. Schaltungsanordnung nach Anspruch 4,
**dadurch gekennzeichnet**, daß die Kompensator-Ausgangsstufe (15) mit derselben Versorgungsspannung (Uh, 18) verbunden ist wie die Steuer- und/oder Regelungsschaltung (12).

6. Schaltungsanordnung nach Anspruch 4 oder 5,
**dadurch gekennzeichnet**, daß ein Anschluß (18) der Versorgungsspannung (Uh) der Kompensator-Ausgangsstufe (15) mit einer der Versorgungsspannungen (2) der Leistungsendstufe (4), mit dem Gehäuse, Kuhlkörper und/oder einer Erdungsklemme des Geräts verbunden ist.

7. Schaltungsanordnung nach einem der vorhergehenden Ansprüche,
**dadurch gekennzeichnet**, daß der aktive Ausgangsanschluß (16) der Kompensator-Ausgangsstufe (15) mit dem Gehäuse (8), einem Kühlkörper ,einer Erdungsklemme und/oder einer der Versorgungsspannungen der Leistungsendstufe des Geräts gekoppelt ist.

8. Schaltungsanordnung nach Anspruch 7,
**dadurch gekennzeichnet**, daß das/die Kopplungsnetzwerk(e) (17) zwischen dem aktiven Anschluß (16) der Kompensator-Ausgangsstufe (15) und dem Gehäuse (8), einer Erdungsklemme oder einer der Versorgungsspannungen der Leistungsendstufe (4) des Geräts einen oder mehrere Kondensatoren (Ck1), Spulen und/oder einen Koppeltransformator aufweist (aufweisen).
